# EUROPÄISCHE PATENTSCHRIFT

(11) **EP 0 679 025 B1**
(45) Veröffentlichungstag und Bekanntmachung des Hinweises auf die Patenterteilung: **22.03.2000**
(21) Anmeldenummer: 95200962.9
(22) Anmeldetag: 18.04.1995
(51) Int. Cl.: H04N 5/775

(54) **Schaltungsanordnung zum Einspeisen eines Antennensignals**
Circuit arrangement for the feeding of an antenna signal
Arrangement de circuit pour l'alimentation d'un signal d'antenne

(30) Priorität: 21.04.1994 DE 4413926
(43) Veröffentlichungstag der Anmeldung: 25.10.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Ruitenburg, Leo, D-22335 Hamburg (DE)
(74) Vertreter: Peters, Carl Heinrich, Dipl.-Ing.

(56) Entgegenhaltungen:
- DE-A- 3 440 119
- GB-A- 2 181 314
- US-A- 4 894 720

## Beschreibung

Die Erfindung bezieht sich auf eine Schaltungsanordnung zum wahlweisen Einspeisen eines Antennensignals an eine Empfangsanordnung eines Videorecorders oder einen an diesen angeschlossenen Fernsehempfänger nach dem Oberbegriff des Patentanspruchs.

Aus der US-A-4,424,591 ist eine Anordnung bekannt, durch die eine von zwei Signalquellen an den Antenneneingang eines Fernsehempfängers gekoppelt werden kann. Diese Anordnung umfaßt einen Antennenschalter, der Halbleiter-Schaltelemente aufweist, die beim Zuführen einer Gleichvorspannung einen von zwei Eingangsanschlüssen mit einem Ausgangsanschluß verbinden, um ein Signal an den Fernsehempfänger zu liefern. Im Zustand ohne Gleichvorspannung wird der verbliebene Eingang an den Antenneneingang des Fernsehempfängers angeschlossen. Mit dieser Schaltungsanordnung soll wahlweise ein Video-Abspielgerät oder eine Antenne an den Fernsehempfänger anschließbar sein.

Aus der DE-B-1,151,553 ist ein gleichstromgesteuerter, elektronischer Umschalter für die Umschaltung von Vielkanal-Trägerfrequenzleitungen und ZF-Breitbandleitungen in Richtfunkanlagen bekannt. Darin ist eine umzuschaltende Leitung über einen Koppelkondensator mit zwei Dioden und einer Gleichstromspeisedrossel verbunden. Zwischen der ersten der beiden Dioden und einem Kondensator zur Ankopplung einer zweiten Leitung ist ein Transistor quer zur Masseleitung und eine Gleichstromspeisedrossel mit einem Serienwiderstand an ein negatives Potential geschaltet. Entsprechend ist zwischen der zweiten der beiden Dioden und einem zweiten Kondensator zur Ankopplung einer dritten Leitung ein zweiter Transistor quer zur Masseleitung und eine zweite Gleichstromspeisedrossel mit einem zweiten Serienwiderstand an das negative Potential angelegt. Zwei weitere Kondensatoren schließen die an den beiden Gleichstromspeisedrosseln auftretende restliche Hochfrequenz kurz. Außerdem kann eine zusätzliche Diode zwischen den Kollektoranschlußpunkt des ersten Transistors und den ersten Kondensator eingeschaltet werden, deren negativer Pol über eine dritte Gleichstromspeisedrossel an einem weiteren negativen Potential liegt. Mit dieser Anordnung kann wahlweise eine von zwei Leitungen auf eine dritte Leitung umgeschaltet werden.

Aus der Druckschrift DE-A-34 40 119 ist eine Schaltungsanordnung für ein Bildaufzeichnungs- und -wiedergabegerät zum Einspeisen des Antenneneingangssignals und/oder eines im Gerät erzeugten HF-Wiedergabesignals in einen Ausgangsanschluß bekannt. Das Antenneneingangssignal wird einem Trennverstärker und einem Kontakt eines Relais zugeführt. Der Trennverstärker ist mit einem Splitter verbunden, dessen erstes Ausgangssignal einem Koppelfilter und dessen zweites dem Tuner des Gerätes zugeführt werden. Ein zweites Eingangssignal erhält das Koppelfilter von einem Modulator des Gerätes. Der Ausgang des Koppelfilters ist mit einem zweiten Kontakt des Relais verbunden, dessen dritter Kontakt an den Ausgangsanschluß angeschlossen ist. Je nach Schalterstellung des Relais wird über diesen dem Ausgangsanschluß das Ausgangssignal des Koppelfilters oder das Antenneneingangssignal zugeführt. Bei dieser Schaltungsanordnung wird die benötigte Umschaltung also mit (mechanischen) Relais durchgeführt.

Die Nachteile derartiger, mechanischer Relais sind allgemein bekannt. Im Vergleich zu elektronischen Schalterelementen sind mechanische Relais aufwendig, teuer und störanfällig, insbesondere gegen Abnutzung und Verschmutzung.

Handelsübliche Videorecorder enthalten jedoch eine Empfangsanordnung, die mit einer Antenne zum Zuführen eines Antennensignals verbunden ist. Über diese Empfangsanordnung wird das Antennensignal an einen an den Videorecorder angeschlossenen Fernsehempfänger durchgeschleift. Das Antennensignal erreicht jedoch nur dann den Fernsehempfänger, wenn die Empfangsanordnung des Videorecorders eingeschaltet ist. Dadurch muß stets zumindest ein Teil des Videorecorders mit Energie versorgt werden, um einen Betrieb des angeschlossenen Fernsehempfängers zu ermöglichen. Dies bedeutet einen zusätzlichen Energieverbrauch und beinhaltet zusätzliche Betriebsrisiken.

Die Erfindung hat die Aufgabe, eine einfache und wirkungsvolle Schaltungsanordnung der eingangs genannten Art zu schaffen, durch die eine Speisung des Fernsehempfängers durch das Antennensignal auch bei abgeschaltetem Videorecorder möglich ist.

Diese Aufgabe wird bei einer Schaltungsanordnung der gattungsgemäßen Art erfindungsgemäß gelöst durch die kennzeichnenden Merkmale des Patentanspruchs.

Bei der erfindungsgemäßen Schaltungsanordnung wird der Signalweg von der Antenne über die Empfangsanordnung zum Fernsehempfänger in der Weise überbrückt, daß bei leitendem Zustand der Schaltvorrichtung das Antennensignal die Empfangsanordnung des Videorecorders nicht mehr durchlaufen muß. Damit kann diese Empfangsanordnung außer Betrieb gesetzt werden, ohne daß der Empfang des Antennensignals im Fernsehempfänger beeinträchtigt wird. Die Schaltvorrichtung ist bei eingeschalteter Empfangsanordnung des Videorecorders in den gesperrten und bei abgeschalteter Empfangsanordnung in ihren leitenden Zustand überführbar. Die Energiezufuhr zur Empfangsanordnung des Videorecorders und das Betätigen der Schaltvorrichtung werden dabei vorzugsweise gekoppelt, so daß die Schaltvorrichtung automatisch in ihren leitenden Zustand überführt wird, wenn der Videorecorder und damit die Empfangsanordnung außer Betrieb gesetzt werden. Dadurch wird eine gesonderte Betätigung der Schaltvorrichtung durch den Benutzer eingespart und Bedienungsfehler vermieden. Die Schaltvorrichtung überbrückt somit automatisch die Empfangsanordnung, wenn diese ausgeschaltet ist. Beim Einschalten der Empfangsanordnung wird die Schaltvorrichtung automatisch gesperrt, um einen Signalkurzschluß zwischen ihrem Eingang und ihrem Ausgang zu vermeiden.

Die Schaltvorrichtung in der erfindungsgemäßen Schaltungsanordnung umfaßt eine Reihenschaltung aus wenigstens zwei Kapazitätsdioden, die abwechselnd in entgegengesetzter Polung aufgereiht sind. Zum Überführen der Schaltvorrichtung in den gesperrten Zustand ist den Verbindungen der Anoden je zweier in der Reihenschaltung aufeinanderfolgender Kapazitätsdioden ein niedriges Potential und den Verbindungen der Kathoden je zweier in der Reihenschaltung aufeinanderfolgender Kapazitätsdioden ein hohes Potential zuleitbar. Die Anzahl der Kapazitätsdioden in dieser Reihenschaltung kann dabei je nach gewünschter Dämpfung in der Schaltvorrichtung unterschiedlich gewählt werden, ohne daß dadurch besondere zusätzliche Maßnahmen erforderlich wären. Durch die Kapazitätsdioden wird in jedem Zustand der Schaltvorrichtung das Fließen eines Gleichstroms unterbunden, wodurch eine sehr leistungsarme Betriebsweise ermöglicht wird. Beim Abschalten der Potentiale wird die so gestaltete Schaltvorrichtung in ihren leitenden Zustand überführt. Dadurch kann sie in sehr einfacher Weise durch die Energiezufuhr an die Empfangsanordnung geschaltet werden.

Bei der erfindungsgemäßen Schaltungsanordnung werden somit die mechanischen Kontakte durch elektronische Schalterelemente ersetzt. Darüber hinaus wird jedoch insbesondere eine Anordnung dieser Schalterelemente, für die ausdrücklich Kapazitätsdioden eingesetzt werden, gelehrt, die einen sehr einfachen und wirkungsvollen Aufbau der erfindungsgemäß ausgebildeten Schaltvorrichtung erlaubt. Diese besonders einfache und wirkungsvolle, d.h. in den beiden Schaltzuständen "leitend" und "gesperrt" eine sehr geringe bzw. sehr hohe Durchgangsdämpfung aufweisende Anordnung ermöglicht außerdem einen Betrieb mit sehr geringer elektrischer Leistungsaufnahme. Durch die Verwendung von Kapazitätsdioden fließt in der Schaltvorrichtung kein Gleichstrom, so daß praktisch keine Schaltleistung für den Betrieb der Schaltvorrichtung benötigt wird. Wie nachstehend an den Beispielen der in den Figuren dargestellten Schaltvorrichtungen zur vorliegenden Erfindung ausgeführt wird, werden zum Sperren der erfindungsgemäßen Schaltvorrichtung lediglich Gleichpotentiale benötigt. Werden diese abgeschaltet, geht die erfindungsgemäße Schaltvorrichtung in ihren leitenden Zustand über.

An dieser Stelle sei angemerkt, daß aus der GB-A-2 181 314 ein Radiofrequenzschalter zum wahlweisen Durchschalten eines Signals von einem zweiten Eingang auf einen ersten Ausgang und zum gleichzeitigen Sperren eines ersten Eingangs und eines zweiten Ausgangs einerseits oder zum Durchleiten eines Signals von dem ersten Eingang zum ersten Ausgang und eines weiteren Signals vom zweiten Eingang zum zweiten Ausgang unter gleichzeitiger Entkopplung dieser beiden Vorgänge andererseits bekannt ist. Diese Schaltungsanordnung ist nicht nur aufgrund der unterschiedlichen Konfiguration der Eingänge und Ausgänge nicht mit der vorliegenden Erfindung vergleichbar; vielmehr fehlen ihr sämtliche Merkmale des Kennzeichens des Patentanspruchs. Der Radiofrequenzschalter gemäß der GB-A-2 181 314 umfaßt zwischen dem ersten Eingang und dem ersten Ausgang eine erste Schaltersektion, zwischen dem ersten Ausgang und dem zweiten Eingang eine zweite Schaltersektion und zwischen dem zweiten Eingang und dem zweiten Asugang eine dritte Schaltersektion. Jede der Schaltersektionen hat dabei grundsätzlich die Konfiguration einer T-Schaltung, bei der der Serienzweig zwei "Rücken- an Rücken"-gekoppelte Dioden enthält, zwischen denen im Fall des mittleren T-Gliedes ein Tiefpaßfilter angeordnet ist. Die äußeren T-Glieder weisen Querzweige auf, die eine Parallelschaltung aus einer Diode und einem Transistor enthalten, die wahlweise eine Verbindung mit Masse herstellen können, wobei außerdem auch (über die dortigen Widerstände 70 bzw. 106) Verbindungen mit dem positiven Pol (Bezugszeichen 30) der Spannungsversorgung geschaffen werden. Demgegenüber sind die Verbindungspunkte zwischen den Schaltersektionen lediglich an Masse geführt, wohingegen an den Anschlüssen des Tiefpaßfilters innerhalb der mittleren Schaltersektion einerseits eine Möglichkeit einer Verbindung an Masse und andererseits über eine weitere Diode die Möglichkeit einer Verbindung mit hohem Potential besteht. Die Ansteuerung dieser Schaltersektionen ist sehr aufwendig und verlangt im Betrieb grundsätzlich die Zufuhr elektrischer Energie. Beim Abschalten der Spannungsversorgung (am Anschluß mit dem Bezugszeichen 30) treten in der Schaltungsanordnung undefinierte Betriebszustände auf, die weder eine klare Sperrung noch eine klare Verbindung zwischen den Eingangs- und Ausgangsanschlüssen bewirken.

Die Figuren, in denen übereinstimmende Elemente mit denselben Bezugszeichen versehen sind, enthalten einige Ausführungsbeispiele der Erfindung. Es zeigen:
**Fig. 1** eine erfindungsgemäße Schaltungsanordnung zum wahlweisen Einspeisen eines Antennensignals an eine Empfangsanordnung eines Videorecorders oder einen Fernsehempfänger, und
**Fig. 2 bis 4** drei Ausführungsbeispiele für die Ausgestaltung der in dieser Schaltungsanordnung verwendeten Schaltvorrichtung.

In Fig. list mit dem Bezugszeichen 1 eine Antenne bezeichnet, die mit einer Empfangsanordnung 2, d.h. einem Hochfrequenz-Empfangsteil, eines Videorecorders 3 über einen Antenneneingang 4 verbunden ist. An einen Antennenausgang 5 des Videorecorders 3 ist ein Fernsehempfänger 6 angeschlossen.

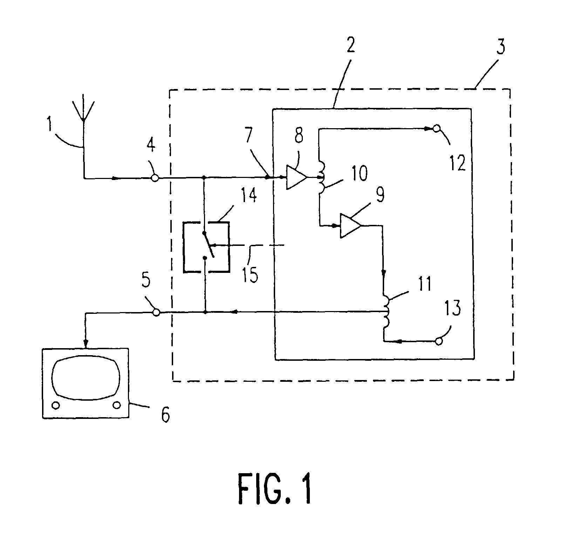

Zum Durchschleifen des Antennensignals von der Antenne 1 über die Empfangsanordnung 2 an den Fernsehempfänger 6 ist der Antenneneingang 4 des Videorecorders 3 mit einem Eingang 7 der Empfangsanordnung 2 verbunden, dem somit das Antennensignal zugeleitet wird. Der Aufbau der Empfangsanordnung 2 ist an sich bekannt und daher in Fig. 1 nicht näher dargestellt. Lediglich zwei Breitbandverstärker 8, 9 sind angedeutet, die mit zwei Induktivitäten 10, 11 verbunden sind und Eingangs- bzw. Durchschleifverstärker für die Empfangsanordnung 2 bilden. Üblicherweise enthält die Empfangsanordnung 2 eine nicht dargestellte Demodulationsanordnung, die über einen Anschluß 12 mit dem Eingang 7 und dem Breitbandverstärker 8 über einen Teil der Induktivität 10 verbunden ist. Ein zweiter Anschluß 13 ist mit einer Modulationseinrichtung verbunden, von der Signale vom Videorecorder über einen Teil der Induktivität 11 dem Fernsehempfänger 6 über den Antennenausgang 5 zugeleitet werden können. Der Breitbandverstärker 9 bildet mit je einem Teil der Induktivitäten 10 und 11 einen Signalweg, auf dem das Antennensignal von der Antenne 1 an den Fernsehempfänger 6 bei eingeschaltetem Videorecorder 3 durchgeschleift und dabei gleichzeitig verstärkt wird.

Erfindungsgemäß weist der Videorecorder 3 eine Schaltvorrichtung 14 auf, die eine unmittelbare Verbindung zwischen der Antenne 1 und dem Fernsehempfänger 6 herstellt und somit in ihrem leitenden Zustand die Empfangsanordnung 2 vom Antenneneingang 4 zum Antennenausgang 5 überbrückt. Die Schaltvorrichtung 14 wird über eine Leitung 15 gesteuert, die bevorzugt mit der Energieversorgung der Empfangsanordnung 2 verbunden ist. Beim Einschalten dieser Energieversorgung wird dann die Schaltvorrichtung 14 gesperrt, beim Abschalten der Energieversorgung jedoch leitend. Dadurch wird auch bei abgeschaltetem Videorecorder 3 die Verbindung zwischen der Antenne 1 und dem Fernsehempfänger 6 uneingeschränkt aufrechterhalten.

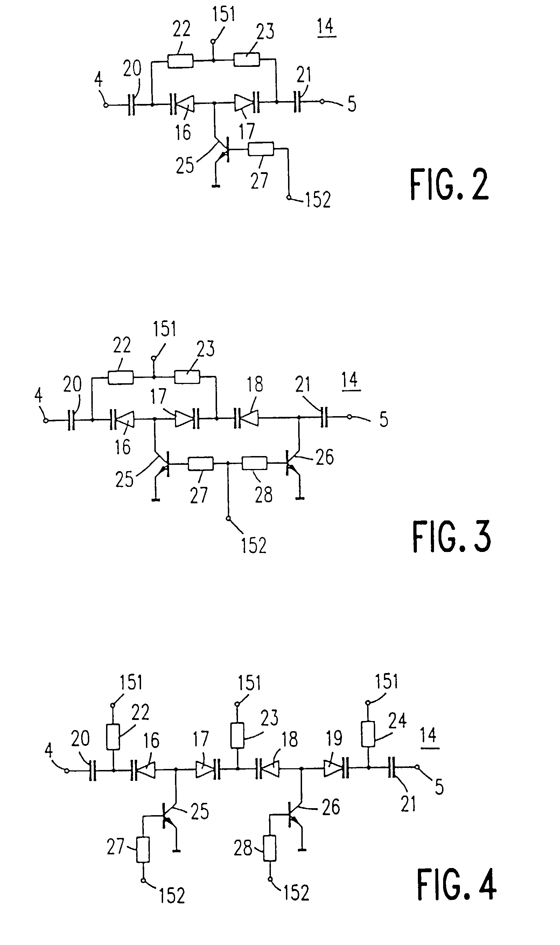

Fig. 2 zeigt ein erstes Ausführungsbeispiel für die Gestaltung der Schaltvorrichtung 14. Zwischen dem Antenneneingang 4 und dem Antennenausgang 5 des Videorecorecorders 3 ist eine Reihenschaltung aus zwei Kapazitätsdioden 16, 17 angeordnet, die in entgegengesetzter Polung aufgereiht sind. Die Kathode der ersten Kapazitätsdiode 16 ist mit dem Antenneneingang 4 verbunden, wobei in diese Verbindung ein erster Koppelkondensator 20 zur Gleichstromtrennung eingefügt ist. In einer Abwandlung dieses Ausführungsbeispiels kann der erste Koppelkondensator 20 durch eine weitere Kapazitätsdiode ersetzt werden, deren Anode mit dem Antenneneingang 4 und deren Kathode mit der Kathode der ersten Kapazitätsdiode 16 verbunden ist. Die Anode der ersten Kapazitätsdiode 16 ist mit der Anode der zweiten Kapazitätsdiode 17 verbunden, deren Kathode mit dem Antennenausgang 5 über einen zweiten Koppelkondensator 21 verbunden ist, der ebenfalls durch eine Kapazitätsdiode ersetzt werden kann, deren Kathode dann mit der Kathode der zweiten Kapazitätsdiode 17 und deren Anode mit dem Antennenausgang 5 zu verbinden wäre.

Die Kathoden der Kapazitätsdioden 16, 17 sind über je einen Vorwiderstand 22, 23 mit einem ersten Steueranschluß 151 verbunden. Die miteinander verbundenen Anoden der Kapazitätsdioden 16, 17 sind über einen Schalttransistor 25 mit Masse verbunden. Mit dem Basisanschluß dieses (ersten) Schalttransistors 25 ist ein zweiter Steueranschluß 152 über einen ersten Basiswiderstand 27 verbunden.

Die Steueranschlüsse 151, 152 bilden die Leitung 15 gemäß Fig. 1, ihnen werden Schaltspannungen zugeführt, die aus der Versorgungsspannung für die Empfangsanordnung 2 des Videorecorders 3 abgeleitet sind. Beispielsweise wird als Schaltspannung für den ersten Steueranschluß im eingeschalteten Zustand der Empfangsanordnung 2 ein (Gleich-) Potential von 33 Volt verwendet, wohingegen an den zweiten Steueranschluß 152 als Schaltspannung ein Potential von 5 Volt angelegt werden kann. Durch entsprechende Dimensionierung des Basiswiderstands 27 und der Vorwiderstände 22, 23 sowie der Kapazitätsdioden 16, 17 und des Schalttransistors 25 können selbstverständlich auch andere Potentiale, vorzugsweise auch übereinstimmende Potentiale, zur Anwendung gelangen. Bei angelegten Schaltspannungen werden die Anoden der Kapazitätsdioden 16, 17 mit Masse verbunden, wohingegen die Kathoden an hohem Potential liegen. Dadurch weisen die Kapazitätsdioden 16, 17 eine sehr geringe Kapazität auf, so daß der Signalweg vom Antenneneingang 4 zum Antennenausgang 5 eine hohe Signaldämpfung aufweist. Werden dagegen die Schaltspannungen, d.h. die hohen (Gleich-) Potentiale, an den Steueranschlüssen 151 und 152 abgeschaltet, wird die Verbindung der Anoden der Kapazitätsdioden 16, 17 mit Masse unterbrochen und an den Kathoden liegt ein niedriges Potential an. Werden die Steueranschlüsse 151, 152 beim Abschalten der Empfangsanordnung 2 nicht definiert auf ein niedriges Potential gelegt, sondern vielmehr potentialfrei geschaltet, stellen sich zwischen den Anoden und Kathoden der Kapazitätsdioden 16, 17 (ggf. durch parasitäre Leckwiderstände) gegen Null strebende Potentialdifferenzen ein, so daß die Kapazitätsdioden 16, 17 jetzt hohe Kapazitätswerte aufweisen. Über diese erfolgt eine gute Signalkopplung vom Antenneneingang 4 zum Antennenausgang 5.

Sollte die mit der Schaltvorrichtung 14 gemäß Fig. 2 erreichbare Signaldämpfung im eingeschalteten Zustand der Empfangsanordnung 2 nicht ausreichend sein, können gemäß den Fig. 3 bzw. 4 noch eine dritte bzw. eine vierte Kapazitätsdiode 18 bzw. 19 in die Reihenschaltung zwischen dem Antenneneingang 4 und dem Antennenausgang 5 eingefügt werden, wobei die Polung dieser Kapazitätsdioden 18, 19 ebenfalls abwechselnd in entgegengesetzter Polung aufgereiht sind und die abwechselnde Polung der ersten und zweiten Kapazitätsdiode 16, 17 entsprechend fortsetzen. Den Kathoden bzw. Anoden dieser dritten bzw. vierten Kapazitätsdiode 18 bzw. 19 werden über den zweiten Vorwiderstand 23 oder zusätzlich einen dritten Vorwiderstand 24 bzw. einen zweiten Schalttransistor 26 mit zugeordnetem zweiten Basiswiderstand 28 die erforderlichen Potentiale zugeleitet. Die Reihenschaltung der Kapazitätsdioden 16 bis 19 läßt sich auch noch beliebig erweitern.

In einer weiteren Abwandlung kann in der Schaltungsanordnung nach Fig. 4 beispielsweise die dritte Kapazitätsdiode 18 durch einen Koppelkondensator ersetzt werden.

Die Ausführungsbeispiele nach Fig. 2 bis 4 können außerdem zur Frequenzgangkompensation mit entsprechenden Anpaßelementen, beispielsweise aus Induktivitäten, Kapazitäten und Widerständen gebildet, ergänzt werden. Dadurch kann beispielsweise das kapazitive Übertragungsverhalten dieser Schaltvorrichtungen wenigstens teilweise ausgeglichen werden.

## Patentansprüche

1. Schaltungsanordnung zum wahlweisen Einspeisen eines Antennensignals an eine Empfangsanordnung (2) eines Videorecorders (3) oder einen an diesen angeschlossenen Fernsehempfänger (6) mit einer Schaltvorrichtung (14), wobei im gesperrten Zustand der Schaltvorrichtung (14) das Antennensignal nur der Empfangsanordnung (2) des Videorecorders (3) zuführbar und von dieser an den Fernsehempfänger (6) weiterleitbar ist und im leitenden Zustand der Schaltvorrichtung (14) das Antennensignal über diese unmittelbar dem Fernsehempfänger (6) zuführbar ist, worin die Schaltvorrichtung (14) bei eingeschalteter Empfangsanordnung (2) des Videorecorders (3) in den gesperrten und bei abgeschalteter Empfangsanordnung (2) in ihren leitenden Zustand überführbar ist, dadurch gekennzeichnet, daß die Schaltvorrichtung (14) eine Reihenschaltung aus wenigstens zwei Kapazitätsdioden (16, 17; 18; 19) umfaßt, die abwechselnd in entgegengesetzter Polung aufgereiht sind, daß zum Überführen der Schaltvorrichtung (14) in den gesperrten Zustand die Kapazitätsdioden (16, 17; 18; 19) mit negativer Vorspannung beaufschlagt werden, so daß die Kapazitätsdioden (16, 17; 18; 19) in diesem Zustand eine sehr geringe Kapazität aufweisen, so daß das am Ausgang (5) der in Reihe geschalteten Dioden (16, 17; 18; 19) anliegende Antennensignal gegenüber dem am Eingang (4) der in Reihe geschalteten Dioden (16, 17; 18; 19) eingespeisten Antennensignal stark gedämpft ist, daß ferner zum Überführen der Schaltvorrichtung (14) in den leitenden Zustand die negative Vorspannung an den Dioden (16, 17; 18; 19) abgeschaltet wird und daß durch das Abschalten der negativen Vorspannung, also ohne positive Vorspannung, sich die Kapazität der Dioden (16, 17; 18; 19) so erhöht, daß das Antennensignal deutlich weniger gedämpft wird.

## Claims

1. A circuit arrangement for optionally applying an antenna signal to a receiver section (2) of a video recorder (3) or to a television receiver (6) connected to said video recorder, by means of a switching device (14) enabling the antenna signal to be applied only to the receiver section (2) of the video recorder (3) and to be passed from said video recorder to the television receiver (6) in the blocked state of said switching device (14), and enabling the antenna signal to be applied directly to the television receiver (6) in the conducting state of said switching device (14), wherein the switching device (14) can be brought to the blocked state when the receiver section (2) of the video recorder (3) is switched on, and to the conducting state when the receiver section (2) is switched off, characterized in that the switching device (14) comprises a series arrangement of at least two capacity diodes (16, 17; 18; 19) which are alternately connected in opposite polarity, in that, in order to bring the switching device (14) to the blocked state, a negative bias is applied to the capacity diodes (16, 17; 18; 19) so that the capacity diodes (16, 17; 18; 19) have a very low capacitance in this state so that the antenna signal which is present at the output (5) of the series-arranged diodes (16, 17; 18; 19) is strongly attenuated as against the antenna signal applied to the input (4) of the series-arranged diodes (16, 17; 18; 19), in that, in order to bring the switching device (14) to the conducting state, the negative bias at the diodes (16, 17; 18; 19) is switched off, and in that, by switching off the negative bias, i.e. without positive bias, the capacitance of the diodes (16, 17; 18; 19) increases to such an extent that the antenna signal is clearly less attenuated.

## Revendications

1. Arrangement de circuit en vue de l'alimentation au choix d'un signal d'antenne sur un dispositif récepteur (2) d'un magnétoscope (3) ou un récepteur de télévision (6) raccordé à celui-ci avec un dispositif de commutation (14), le signal d'antenne ne pouvant être amené au dispositif récepteur (2) du magnétoscope (3) et transmis de celui-ci au récepteur de télévision (6) que lorsque le dispositif de commutation (14) est à l'état bloqué et le signal d'antenne pouvant être amené directement au récepteur de télévision (6) lorsque le dispositif de commutation (14) est à l'état conducteur par l'intermédiaire d celui-ci, le dispositif de commutation (14) pouvant être amené à l'état bloqué lorsque le dispositif récepteur (2) du magnétoscope (3) est mis sous tension et à l'état conducteur lorsque le dispositif récepteur (2) est mis hors tension, caractérisé en ce que le dispositif de commutation (14) comprend un montage en série d'au moins deux diodes de capacité (16, 17 ; 18; 19) qui sont alignées en alternance en polarité opposée, qu'en vue d'amener le dispositif de commutation (14) à l'état bloqué, les diodes de capacité (16, 17; 18 ; 19) sont alimentées en une tension de polarisation négative si bien que les diodes de capacité (16, 17 ; 18 ; 19) présentent dans cet état une capacité très minime si bien que le signal d'antenne appliqué à la sortie (5) des diodes montées en série (16, 17 ; 18 ; 19) est fortement atténué par rapport au signal d'antenne amené à l'entrée (4) des diodes (16, 17 ; 18 ; 19) montées en série, que par ailleurs, en vue d'amener le dispositif de commutation (14) à l'état conducteur, la tension de polarisation négative sur les diodes (16, 17 ; 18 ; 19) est couplée et que, par la coupure de la tension de polarisation négative, donc sans tension de polarisation positive, la capacité des diodes (16, 17 ; 18 ; 19) est majorée de telle sorte que le signal d'antenne soit nettement moins atténué.
